# EUROPÄISCHE PATENTSCHRIFT

(11) **EP 1 887 646 B1**
(45) Veröffentlichungstag und Bekanntmachung des Hinweises auf die Patenterteilung: **10.09.2014**
(21) Anmeldenummer: 07013697.3
(22) Anmeldetag: 12.07.2007
(51) Int. Cl.: H01M 8/06, H01M 8/02

(54) **Vorrichtung zur Durchführung einer chemischen Reaktion**
Device for performing a chemical reaction
Dispositif destiné à la réalisation d'une réaction chimique

(30) Priorität: 09.08.2006 DE 102006037353
(43) Veröffentlichungstag der Anmeldung: 13.02.2008
(73) Patentinhaber: Behr GmbH & Co. KG, 70469 Stuttgart (DE)
(72) Erfinder: Kaiser, Wolfram, 70437 Stuttgart (DE); Watzlawski, Markus, 73760 Ostfildern (DE)
(74) Vertreter: Grauel, Andreas

(56) Entgegenhaltungen:
- DE-A1- 19 517 451
- JP-A- 2 155 170
- JP-A- 10 092 447
- US-A1- 2004 137 309
- US-B1- 6 777 126

## Beschreibung

Die Erfindung betrifft eine Vorrichtung zur Durchführung einer chemischen Reaktion zur Erzeugung eines Brenngases für eine Brennstoffzelle. Auch betrifft die Erfindung eine Bipolarplatte sowie die Verwendung der Bipolarplatte.

Die Umwandlung von chemischer in elektrische Energie mittels derartiger Vorrichtungen, z. B. mittels einer Brennstoffzelle, stellt eine effiziente und umweltfreundliche Methode zur Gewinnung von elektrischem Strom aus den Betriebsmedien Wasserstoff und Sauerstoff dar. Dabei finden üblicherweise zwei räumlich getrennte Elektrodenreaktionen statt, bei denen Elektronen freigesetzt bzw. gebunden werden. Ein Beispiel für zwei korrespondierende Elektrodenreaktionen in einer gattungsgemäßen Vorrichtung, z. B. in einer Polymerelektrolytbrennstoffzelle (kurz PEMFC genannt) sind folgende Reaktionen:

H₂ => 2H⁺ + 2e⁻ (Anodische Reaktion)

2H⁺ + 2e⁻ + ½ O₂ => H₂O (Kathodische Reaktion)

Bei anderer Bauart, z. B. einer Festoxid-Brennstoffzelle (kurz SOFC genannt) können beispielsweise folgende Reaktionen beobachtet werden:

H₂ + O²⁻ => H₂O + 2e- (Anodische Reaktion I)

CO + O²⁻ => CO₂₊2e⁻ (Anodische Reaktion II)

O₂ + 4e⁻ => 2O²⁻ (Kathodische Reaktion)

Andere gattungsgemäße Vorrichtungen weisen zum Teil andere Reaktionen auf. Gemeinsam ist jeweils der Transport einer Spezies in elektrisch nichtneutraler Form durch einen Elektrolyten und den parallel hierzu verlaufenden Transport von Elektronen durch einen äußeren Leiter, um die Spezies nach dem Transportvorgang in einen elektrisch neutralen Zustand zurückzuversetzen.

Durch elektrische Verbindung der räumlich getrennten Reaktionszonen kann ein Teil der dabei umgesetzten Reaktionsenthalpie direkt als elektrischer Strom gewonnen werden. Üblicherweise werden mehrere elektrisch in Serie geschaltete Reaktionseinheiten, z. B. Brennstoffzellen, aufeinander gestapelt und ein solcher Stapel, z.B. ein Brennstoffzellenstapel, als Stromquelle verwendet. Eine einzelne Reaktionseinheit, z. B. eine Brennstoffzelle, besteht dabei aus einer Elektrolyteinheit, wie Membran, welche die Reaktanden, insbesondere Wasserstoff und Sauerstoff bei einer Polymerelektrolytbrennstoffzelle (PEMFC), beziehungsweise Wasserstoff/Kohlenmonoxid und Sauerstoff bei einer Festoxid-Brennstoffzelle (SOFC), voneinander trennt und eine Ionenleitfähigkeit, insbesondere eine H⁺-Protonenleitfähigkeit bei einer PEMFC oder eine O²⁻-Leitfähigkeit, aufweist, sowie aus zwei mit Katalysatormaterial belegten Elektroden, die unter anderem zum Abgriff des von der Reaktionseinheit, der Brennstoffzelle, erzeugten elektrischen Stroms erforderlich sind.

Die Reaktanden, beispielsweise Wasserstoff und Sauerstoff, und das Reaktionsprodukt Wasser sowie gegebenenfalls ein Medium, das zur Abführung von überschüssiger Reaktionswärme dient, strömen durch Fluidkanäle, wobei die Reaktanden nicht notwendigerweise in reiner Form vorliegen müssen. Beispielsweise kann das Fluid auf der Kathodenseite Luft sein, deren Sauerstoff an der Reaktion teilnimmt. Insbesondere bei Verwendung eines wärmeabführenden Mediums wird durch eine thermische Verbindung der jeweiligen Fluidkanäle für einen ausreichenden Wärmeübertrag zwischen den jeweiligen Fluiden gesorgt.

Reaktanden und Reaktionsprodukte werden im Rahmen der vorliegenden Erfindung als Reaktionsmedien bezeichnet. Als Temperiermedium wird ein Medium bezeichnet, das geeignet ist, einer Vorrichtung beziehungsweise einer Reaktionszone Wärme zu- oder abzuführen.

Zur Erzeugung des beispielsweise in einer Brennstoffzelle benötigten, wasserstoffhaltigen Reaktanden, insbesondere bei einer Erzeugung an Bord von Kraftfahrzeugen, wird auf flüssigen Brennstoff, z. B. Benzin, Diesel, Methanol, oder gasförmige Brennstoffe, z. B. Erdgas, als Ausgangsbasis für den Reaktanden zurückgegriffen.

Für die Herstellung eines wasserstoffreichen Reaktanden, insbesondere eines gasförmigen Reaktanden aus diesen Kraft- oder Brennstoffen sind verschiedene Verfahren bekannt, die im Wesentlichen auf einem oder der Kombination mehrerer der folgenden chemischen Prozesse beruhen:
- Partielle Oxidation eines Brennstoffes über einem Katalysator unter Zugabe von-Sauerstoff, insbesondere Luft im stöchiometrischen oder unterstöchiometrischen Anteil. Beispiel für Oktan:

   C₈H₁₈ + 8 O₂ → 8 CO₂ + 9 H2 (stöchiometrisch) bzw.

   C₈H₁₈ + 4 O₂ → 8 CO + 9 H₂ (unterstöchiometrisch)
- Dampfreformierung eines Brennstoffes über einem Katalysator unter Zugabe von Wasser. Beispiel für Oktan:

   C₈H₁₈ + 16 H₂O→ 8 CO₂ + 25 H₂
- Autotherme Reformierung eines Brennstoffes durch Kombination von partieller Oxidation und Dampfreformierung dahingehend, dass die Energiebilanz der Gesamtreaktion durch Kombination der endothermen Dampfreformierung und der exothermen partiellen Oxidation gerade ausgegilchen wird.

In der Regel läuft ein solcher Prozess in einem spezieller Vorrichtung, einem so genannten Reformer, ab. Zur Reduzierung der Anzahl von Komponenten und des Bauraumaufwandes ist in der DE 10 2005 055 043 A1 ein Brennstoffzellenstapel beschrieben, bei dem wesentliche Teile des Gaserzeugungsprozesses bipolarplattenintern in einem speziellen zusätzlichen Strömungsfeld durchgeführt werden.

Insbesondere wird hier die Durchführung von Reaktionen an einem von der Bipolarplatte thermisch teilweise isolierten Zwischenblech beschrieben, das im Rahmen eines adiabaten Verbrennungsprozesses Temperaturen erreichen kann, die deutlich über der Zelltemperatur liegen. Dadurch wird die Durchführung von Reformierungsreaktionen >200°C in einer Hochtemperatur-PEM-Brennstoffzelle mit Zelltemperaturen <200°C ermöglicht.

Nachteil der dort geschilderten Vorgehensweise ist der, dass durch Einbringen von einem oder auch mehreren Zwischenblechen nur ein relativ kurzer Durchströmungsweg entsprechend der Strömungsfeldlänge realisiert werden kann. Daraus ergibt sich ein größeres erforderliches Bauvolumen der Bipolarplatte bzw. des Brennstoffzellenstacks, um die für die Reaktion erforderliche Raumgeschwindigkeit in Verbindung mit dem sich einstellenden Temperaturprofil in der Reaktionszone zu erreichen.

Die US 2004/137309 A1 offenbart eine Bipolarplatte

Aufgabe der Erfindung ist es, eine Vorrichtung zur Durchführung einer chemischen Reaktion anzugeben, die einfach und bei geringem Aufwand eine hohe Effizienz besitzt. Darüber hinaus ist eine einfach aufgebaute und effiziente Bipolarplatte anzugeben.

Die erstgenannte Aufgabe wird erfindungsgemäß gelöst durch die Merkmale des unabhängigen Anspruchs 1. Hinsichtlich der Bipolarplatte wird die Aufgabe erfindungsgemäß gelöst durch die Merkmale des Anspruchs 17. Vorteilhafte Weiterbildungen sind Gegenstand der Unteransprüche.

Die erfindungsgemäße Vorrichtung zur Durchführung einer chemischen Reaktion zur Erzeugung eines Brenngases für eine Brennstoffzelle, umfasst zwei übereinander angeordnete Formteile, welche ein Reaktionsströmungsfeld mit einem ober- und unterseitig der Formteile verlaufenden Strömungskanal für einen Brennstoff bilden, wobei der Strömungskanal einen Katalysator zur chemischen Reaktion des Brennstoffs aufweist und die beiden Formteile außenseitig jeweils mit einer Deckplatte versehen sind, dadurch gekennzeichnet, dass die Formteile mit Durchbrüchen versehen sind, die den oberseitigen Strömungskanal und den unterseitigen Strömungskanal bzw. des jeweiligen Formteils miteinander verbinden. Eine derartige Vorrichtung weist gegenüber herkömmlichen Katalysatorblechen bei moderatem Druckverlust eine relativ große katalytische Oberfläche bei möglichst kleinem Bauvolumen auf. Dabei ist die Oberfläche durch das beidseitig der Formteile verlaufende Strömungsfeld deutlich, insbesondere dreifach vergrößert. Darüber hinaus verfügt die Vorrichtung über eine regenerative Gasvorwärmung zur Steigerung der Reformierungseffizienz.

Die Vorrichtung eignet sich insbesondere zur Durchführung einer katalytischen Reaktion, wie der Reformation, bei der als Reaktionsmedium der zu reformierende Brennstoff, insbesondere ein gasförmiger oder flüssiger Brennstoff, durch den beispielsweise katalytisch beschichteten Strömungskanal geführt wird. Zweckmäßigerweise ist der Katalysator ein Edelmetall, Kupfer, Zink, Aluminium oder eine Platin-Aluminiumoxid-Verbindung oder eine Platin-Zinn-Verbindung, der beispielsweise auf ein Metallblech aufgebracht ist. Alternativ kann das jeweilige Formteil selbst als ein metallisches Blech aus Aluminium, Kupfer oder einem anderen geeigneten Material gebildet sein.

In einer einfachen Ausführungsform ist der Strömungskanal durch Umformung der Formteile gebildet. Beispielsweise weist das Formteil durch Pressen eine u-förmige Wellenstruktur auf. Dabei bilden die Senken abwechselnd einen Strömungskanal oberseitig und einen unterseitig, der im Wesentlichen gerade verläuft. Mit anderen Worten: Das Strömungsfeld ist durch mehrere parallele Strömungskanäle gebildet, die ober- und unterseitig der Formteile verlaufen. Alternativ kann der Strömungskanal auch einen anderen beliebigen Verlauf, z. B. einen mäanderförmigen Verlauf, durch eine andere geeignete Umformung aufweisen. Zweckmäßiger weisen die Formteile zueinander korrespondierende Umformungen auf, so dass die Formteile unter Bildung des Strömungskanals aufeinander stapelbar sind.

Für einen durchgehende Führung des zu reformierenden Brennstoffs ist oberseitig des einen Formteils eine Zuführung für den zu reformierenden Brennstoff und unterseitig des anderen Formteils eine Abführung für den im Verlauf des Strömungskanals reformierten Brennstoff vorgesehen. Auch können die Zu- und Abführungen an einer anderen geeigneten Stelle oder umgekehrt in die Formteile eingebracht sein. Dabei können die Zuführung und die Abführung derart ausgebildet sein, dass sie alle Strömungskanäle speisen bzw. den reformierten Brennstoff von allen Strömungskanälen abführen. Alternativ können von der Zuführung und der Abführung Sammelverteiler und/oder Sammelkanäle zu den Strömungskanälen führen. Für einen vollständigen Durchlauf des Brennstoffs entlang der Strömungskanäle sind die Formteile mit Durchbrüchen versehen, die den oberseitigen Strömungskanal und den unterseitigen Strömungskanal des jeweiligen Formteils miteinander verbinden.

Zur Vorwärmung oder Aufheizung des einströmenden und zu reformierenden Brennstoffs durchläuft dieser den Strömungskanal ober- und unterseitig der Formteile und zwischen diesen jeweils im Gegenstrom. Dabei durchläuft der zu reformierende Brennstoff den Strömungskanal oberseitig des einen Formteils und unterseitig des anderen Formteils im Gleichstrom und zwischen beiden Formteilen im Gegenstrom. Hierdurch wird die Reformierungstemperatur, die sich im Verlauf des Strömungskanals erhöht, genutzt um den einströmenden Brennstoff vorzuwärmen. Dieser rekursive Prozess erhöht die Wasserstoffausbeute des Reformierungsprozesses. Dabei dient das Reaktionsmedium im Verlauf des Strömungskanals auch als Temperiermedium, indem bereits reformierter Brennstoff zur Vorwärmung des einströmenden zu reformierenden Brennstoffs genutzt wird.

In einer weiteren Ausführungsform sind die Deckplatten außenseitig mit Stützelementen versehen, welche die Deckplatten nach außen hin unter Bildung eines Spaltes gegenüber weiteren äußeren Formteilen abstützen. Dies ermöglicht eine punktuelle Abstützung der im Betrieb der Vorrichtung heißen Formteile gegenüber weiteren äußeren Formteilen. Bei einer Anordnung der Vorrichtung als innerer Kern in einer Bipolarplatte zur platteninternen Erzeugung von Wasserstoff wird durch die punktuelle Abstützung eine Überhitzung der Brennstoffzelle vermieden und der Wärmeverlust durch Wärmeleitung im reaktiven Bereich minimiert. Diese Wärmeverlustminimierung gestattet die Aufrechterhaltung der für den Reformierungsprozess erforderlichen hohen Temperaturen im inneren Kern und führt zu einer weiteren Effizienzsteigerung der Reformierungsreaktion.

Zusätzlich kann zwischen den äußeren Deckplatten und den äußeren Formteilen jeweils eine Zwischenplatte angeordnet sein, die außenseitig mit weiteren Stützelementen versehen ist, die das jeweilige äußere Formteile unter Bildung eines Spaltes gegenüber der zugehörige Zwischenplatten abstützt. Zweckmäßigerweise ist zwischen den äußeren Formteilen und den Zwischenplatten ein Kühlströmungsfeld gebildet. Dies ermöglicht eine thermische Temperierung der äußeren Formteile der Bipolarplatte einer Brennstoffzelle zum Schutz vor Überhitzung durch Wärmeleitung aus dem heißen inneren Kern. Zweckmäßigerweise sind die Stützelemente durch Umformung eines Bauteils, beispielsweise eines Metallblechs, gebildet.

Die Deckplatte und der Zwischenplatte sind beispielsweise dünne Metallbleche, in die entsprechende Noppen eingepresst oder in anderer Art eingebracht sind. Die Formteile sind ebenfalls aus dünnen Metallblechen oder Blechen aus einer Metalllegierung gebildet. Zur Vermeidung von Bypässen und zur Abdichtung der Strömungsfelder sind die Deckplatten mit Dichtungsnuten zur Minimierung von Bypassströmungen versehen. Darüber hinaus sind die Formteile und die Deckplatten umlaufend dicht miteinander verbunden, insbesondere durch Schweißen, Löten und/oder mechanisches Umformen. Zweckmäßigerweise sind die Formteile, Deckplatten und Zwischenplatten sowie äußeren Formteile zu einem Stapel aufeinander stapelbar, wobei die inneren Formteile mit den abgedeckten Deckplatten den inneren Kern bilden, auf den ober- und unterseitig jeweils eine Zwischenplatte und ein weiteres äußeres Formteil aufstapelbar sind. Dabei sind auf den inneren Kern und den äußeren Formteilen einer Bipolarplatte ober- und/oder unterseitig abwechselnd Membranen und/oder Elektrolyteinheiten zur Bildung eines Brennstoffzellenstapels aufstapelbar.

Ausführungsbeispiele der Erfindung werden anhand einer Zeichnung näher erläutert. Darin zeigen:
- Fig. 1: schematisch eine Vorrichtung zur Durchführung einer chemischen Reaktion mit zwei übereinander geordneten Formteilen, die nach außen von Deckplatten begrenzt sind,
- Fig. 2: schematisch das obere Formteil gemäß Figur 1,
- Fig. 3: schematisch das untere Formteil gemäß Figur 2,
- Fig. 4: schematisch einen Brennstoffzellenstapel mit der Vorrichtung gemäß Figur 1 als inneren Kern, und
- Fig. 5, 6: schematisch verschiedene Ausführungsformen für eine Anordnung aus mehreren Bipolarplatten mit verschiedenartigen inneren Vorrichtungen, die jeweils als innerer Kern einer Bipolarplatte zur Brenngaserzeugung ausgebildet sind.

Einander entsprechende Teile sind in allen Figuren mit den gleichen Bezugszeichen versehen.

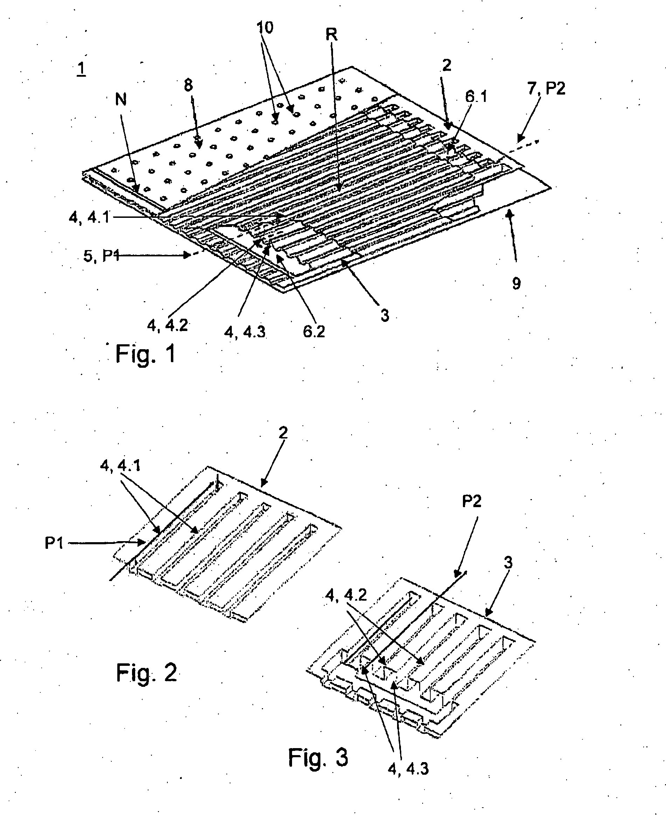

Figur 1 zeigt eine Vorrichtung 1 mit einem oberen Formteil 2 und einem unteren Formteil 3. Die Formteile 2 und 3 sind umgeformte Metallbleche, welche eine im Wesentlichen u-förmige Wellenstruktur aufweisen, so dass ober- und unterseitig der Formteile 2 und 3 Strömungskanäle 4 gebildet sind. Zur Durchführung einer chemischen Reaktion, insbesondere einer Reformierung eines durch die Strömungskanäle 4 strömenden und zu reformierenden Brennstoffs und/oder einer Wasser-Gas-Shift-Reaktion zur Erhöhung des zu erzeugenden Wasserstoff-Anteils weisen die Strömungskanäle 4 einen Katalysator auf. Hierzu sind die Formteile 2 und 3 beispielsweise mit einem Katalysator beschichtet. Alternativ können die Formteile 2 und 3 aus einem Blech aus einem geeigneten Material, wie z. B. Aluminium oder Kupfer, gebildet sein. Die Strömungskanäle 4 bilden dabei ein Reaktionsströmungsfeld F für die Vorrichtung 1 zur Durchführung der Reformierung bzw. der Wasser-Gas-Shift-Reaktion.

Der zu reformierende Brennstoff, z. B. gasförmige oder flüssige, insbesondere Erdgas bzw. Benzin, durchläuft die Vorrichtung 1, d.h. die Strömungskanäle 4 der Formteile 2 und 3 ober- und unterseitig in einer S-ähnlichen Form und somit im Gegenstrom, wobei im Bereich der zwischen den beiden Formteilen 2 und 3 verlaufenden Strömungskanäle 4 die höchsten Temperaturen erreicht wird. Dabei weisen die Formteile 2 und 3 zur Bildung von Trennwänden zwischen den ober- und unterseitig verlaufenden Strömungskanälen 4 eine möglichst geringe Dicke und eine möglichst hohe thermische Leitfähigkeit auf. Die als Primärwärmeübertragerflächen dienenden Trennwände führen so zu einer regenerativen Vorwärmung bzw. Aufheizung des einströmenden Brennstoffes, z. B. Erdgas, vom mittleren Strömungskanal 4, der zwischen den beiden Formteilen 2 und 3 verläuft, in dem sich eine maximale Temperatur einstellt. Dies erhöht in einem rekursiven Prozess die Reformierungstemperatur im Innern der Vorrichtung 1, die auch als heißer Kern bezeichnet wird, und verbessert die Wasserstoffausbeute des Reformierungsprozesses.

Im Betrieb der Vorrichtung 1 tritt der zu reformierende Brennstoff von links über eine Zuführung 5 in obere parallele Strömungskanäle 4.1 in das obere Formteil 2 ein (Pfeil 1), strömt durch die oberen Strömungskanal 4.1 bis zu einem Durchbruch 6.1 und von dort senkrecht nach unten in die unterseitig verlaufenden unteren parallelen Strömungskanäle 4.2. Von dort strömt der Brennstoff im Gegenstrom bis zu einem weiteren Durchbruch 6.2 im unteren Formteil 3, so dass der Brennstoff unterseitig des unteren Formteils 3 erneut im Gegenstrom unterseitige parallele Strömungskanäle 4.3 durchströmt und von dort aus über eine Abführung 7 aus der Vorrichtung 1 herausströmt (Pfeil 2).

Im Detail ist die Strömungsrichtung des Brennstoffs in den Figuren 2 und 3 anhand der getrennten Darstellung von oberen Formteil 2 und unteren Formteil 3 dargestellt.

Während des Durchströmens des Vorrichtung 1 findet die Reformierungsreaktion statt, die als temperaturgeführte autotherme Reformierung (kurz ATR genannt) im quasi-adiabaten heißen Kern, der aus den beiden Formteilen 2 und 3 gebildet ist, betrieben wird. Der "heiße Kern" besteht aus einer Anzahl von in Eierkartonkonfiguration angeordneten oberen und unteren Formteilen 2 und 3, die auch als Kanalbleche bezeichnet werden und die mit einem geeigneten Katalysator beschichtet sind.

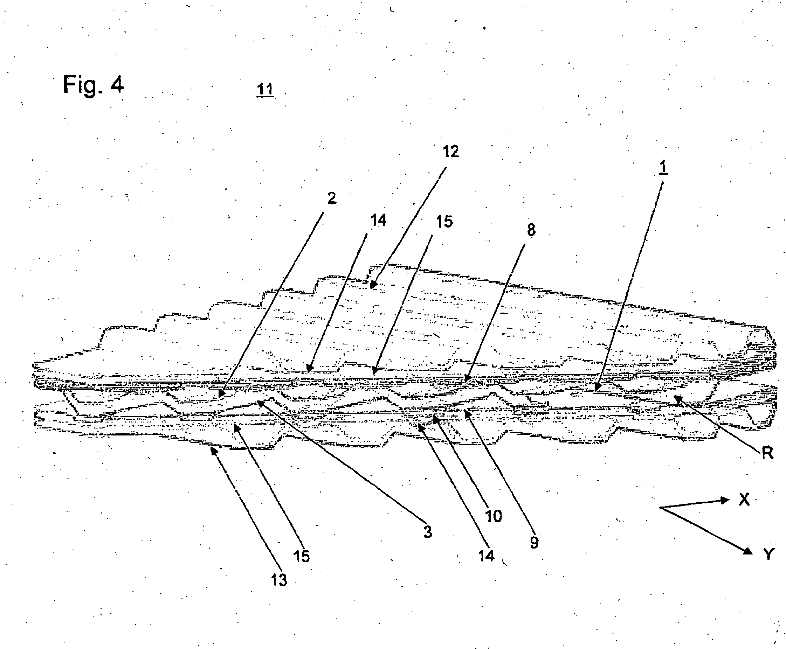

Die Formteile 2 und 3 sind auf den Außenseiten von Deckplatten 8 und 9 begrenzt. Die äußeren Deckplatten 8 und 9 sind mit Stützelementen 10, z. B. Noppen, versehen. Diese dienen der thermischen Isolierung des heißen Kerns und somit der Vorrichtung 1 bei einer Anordnung dieser als innerer Kern in einer Bipolarplatte 11, wie dies in Figur 4 näher dargestellt ist. Die Stützelemente 10 stützen die Vorrichtung 1 gegenüber den Wandungen weiterer äußerer Formteile 12 und 13 ab, die beispielsweise als Halbschalen, ausgebildet sind. Die Formteile 12 und 13 weisen ebenfalls durch Umformung ausgebildete Strömungskanäle 4.4 und 4.5 zum Führen von Reaktionsmedien, wie Sauerstoff bzw. Wasserstoff auf.

Die im Betrieb stattfindende Aufheizung der Vorrichtung 1 als Ganzes und die daraus resultierende Gefahr der Überhitzung der Bipolarplatte 11 wird über die punktuelle Lagerung der Vorrichtung 1 über die Stützelemente 10 einerseits und durch eine schwebende Anordnung der Formteile 12 und 13 andererseits in Verbindung mit einem flüssigen Kühlmedium, das im Rahmen eines Kühlkreislaufs durch die Vorrichtung 1 geführt wird, vermieden.

Hierbei wird die Vorrichtung 1 durch die Stützelemente 10 der Deckplatten 8 und 9 thermisch von den anderen Komponenten der Bipolarplatte 11 getrennt, so dass Wärmeverluste vom Kern zu den äußeren Formteilen 12 und 13 der Bipolarplatte 11 durch Wärmeleitung verringert werden können. Zur Vermeidung von Bypässen sind die Deckplatten 8 und 9 an der Vorderkante mit einer Dichtsicke oder Dichtungsnute N versehen, die dafür sorgt, dass kein nennenswerter Nebenstrom stattfinden kann.

In einer weiteren bevorzugten Ausführung sind die äußeren, die Brennstoffzellenströmungsfelder bildenden Formteile 12 und 13 der Bipolarplatte 11 schwebend ausgeführt. Dazu werden die Formteile 12 und 13 mittels Stützelemente 14 einer zwischen den Deckplatten 8 und 9 angeordneten Zwischenplatte 15 angehoben, so dass ein beispielsweise flüssiges Kühlmedium unterhalb der Formteile 12 und 13 strömt und die oberseitigen Brennstoffzellenströmungsfelder temperiert, insbesondere kühlt.

Die schwebenden Formteile 12 und 13 und somit die schwebenden Brennstoffzellenströmungsfelder zeichnen sich dadurch aus, dass der Kühlstrom die wannenförmigen Kanäle des Anoden- bzw. Kathodenströmungsfelds sowohl von den Kanalflanken als auch vom Kanalboden her zwischen den Stützelementen 14 umspült und damit temperieren kann. Damit wird die Überhitzung der Membran-Elektroden-Einheit der Brennstoffzelle durch Kontrolle der Kühlmedientemperatur verhindert. Diese Stützelemente 14 sind auf der Zwischenplatte 15 angeordnet und erzeugen einen Spalt zwischen den Böden der schwebenden Formteile 12 und 13 und den Oberseiten der heißen Vorrichtung 1, die als innerer Kern zwischen den beiden Formteilen 12 und 13 bzw. den zugehörigen Zwischenplatten 15 angeordnet ist. Die Vorrichtung 1 ist somit durch die Stütznoppen oder Stützelemente 14 der Zwischenplatte 15 zusätzlich thermisch entkoppelt. Im Spalt zwischen Zwischenplatte 15 und Formteil 12 bzw. 13 wird ein geeignetes Kühlmedium in geeigneter Menge hindurchgeführt, so dass die maximal zulässige Temperatur des Brennstoffzellenstapels 11 nicht überschritten werden kann.

Im Detail sind zum einen die außen liegenden Formteile 12 und 13 und deren Bipolarplattenströmungsfelder für den Transport der Reaktionsmedien Wasserstoff beziehungsweise wasserstoffhaltiges Reformat und Sauerstoff beziehungsweise Luft vorgesehen. Über die Zuführung 5 der heißen inneren Vorrichtung 1 strömt das zu reformierende Gas in negativer x-Richtung ein. Die X-Richtung stellt dabei die Längsausdehnung des Kühlströmungsfelds R dar. Die Y-Richtung stellt die Ausdehnung der quer zum Kühlströmungsfeld R verlaufenden Anoden- bzw. Kathodenströmungsfelder dar. Des Weiteren liegt der mittlere Strömungskanal 4.2 direkt unter dem oberen Strömungskanal 4.1 und heizt das im oberen Strömungskanal 4.1 eintretende Gas regenerativ auf. Über den unteren Strömungskanal 4.3 tritt das nun reformierte Gas aus der Vorrichtung 1 aus.

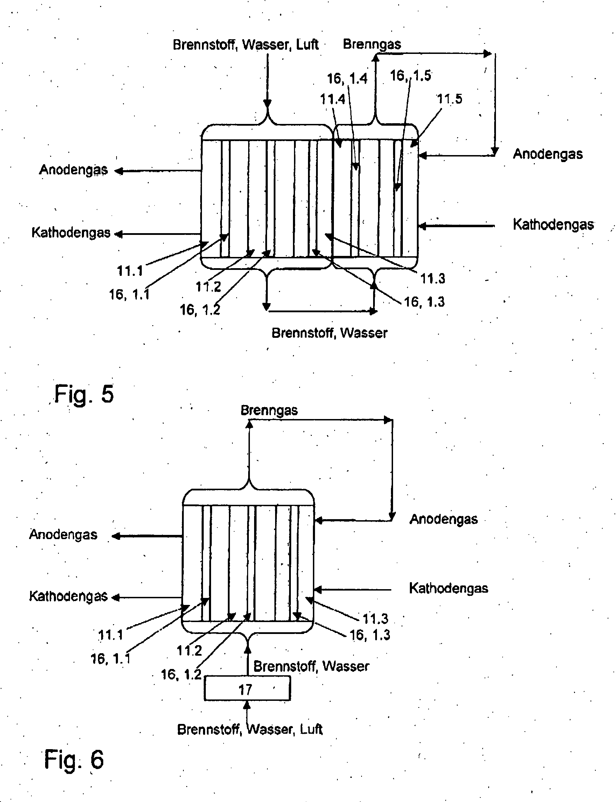

Dieses Reformat enthält nun im Wesentlichen Wasserstoff, Kohlenstoffmonoxid, Kohlenstoffdioxid, Wasser und Stickstoff. Der Wasserstoffgehalt kann nun in einem weiteren Prozessschritt, in welchem eine so genannte Wasser-Gas-Shift-Reaktion durchgeführt wird, erhöht werden. Hierzu weist ein Paket oder Stapel mehrerer Bipolarplatten 11.1 bis 11.5 jeweils verschiedenartige innere Vorrichtungen 1.1 bis 1.5 auf. Ein derartiger Stapel wird auch Brennstoffzellenstapel genannt, wobei die Bipolarplatten 11.1 bis 11.5 oder Einzelbrennstoffzellen in nicht näher dargestellter Art und Weise durch Membranen und/oder Elektrolyteinheiten voneinander getrennt sind. In der Figur 5 ist beispielsweise ein Brennstoffzellenstapel von fünf Bipolarplatten 11.1 bis 11.5 gezeigt. Die Bipolarplatten 11. 1 bis 11.5 sind im Wesentlichen identisch aufgebaut, wie oben unter Figur 4 näher beschrieben. Die Bipolarplatten 11.1 bis 11.5 umfassen jeweils im Wesentlichen identisch aufgebaute Vorrichtungen 1.1 bis 1.5 als innere Kerne 16, die zur Durchführung verschiedener chemischer Reaktionen unterschiedlich gespeist werden. So wird in den strömungseingangsseitig angeordneten Vorrichtungen 1.1 bis 1.3 als Brennstoff ein zu reformierendes Gas zusammen mit Luft und Wasser eingeführt und dort einer Reformierung unterzogen. Zur Erhöhung des Wasserstoffgehaltes im reformierten Gas wird den weiteren Vorrichtungen 1.4 bis 1.5 das reformierte Gas zusammen mit Wasser als Gemisch zugeführt. In den weiteren Vorrichtungen 1.4 bis 1.5 erfolgt dann eine Wasser-Gas-Shift-Reaktion zur Erhöhung des Wasserstoffgehaltes und Reduzierung des Kohlenstoffmonoxidgehaltes. Dabei wird den weiteren Vorrichtungen 1.4 bis 1.5 das reformierte Gas der ersten Vorrichtungen 1.1 bis 1.3 und Wasser zugeführt. Durch Zuführung des Wassers wird der Wasserstoffgehalt weiter erhöht, wobei der Kohlenstoffmonoxid-Anteil sinkt gemäß der Wasser-Gas-Shift-Reaktion (kurz WGS-Reaktion genannt):

CO + H₂O => CO₂ + H₂

Ist durch diese Prozessführung der Kohlenstoffmonoxid-Anteil auf ein für den zugehörigen Brennstoffzellenstapel erträgliches Maß, in der Regel ca. 1 % bis 3 %, gesunken, kann das so erzeugte Brenngas direkt zur Anode des Brennstoffzellenstapels geführt und zur Stromerzeugung genutzt werden.

In einer weiteren alternativen Anordnung eines Pakets von Bipolarplatten 11.1 bis 11.3 oder Einzelbrennstoffzellen sind als innerer Kern 16 mehrere Vorrichtungen 1.1 bis 1.3 ausschließlich zur Wasser-Gas-Shift-Reaktion ausgebildet, siehe Figur 6. Dabei wird den Vorrichtungen 1.1 bis 1.3 von einem externen Reformer 17 reformiertes Gas und Wasser als Gemisch zur Durchführung der Wasser-Gas-Shift-Reaktion zugeführt. Das erzeugte Brenngas kann anschließend direkt zur Anode des Brennstoffzellenstapels geführt werden.

Zur Kühlung der jeweiligen Bipolarplatte 11.1 bis 11.5 fließt ein beispielsweise flüssiges Kühlmedium oberhalb der Zwischenplatte 15 und trennt die äußeren Formteile 12 und 13 thermisch weitgehend von der betreffenden inneren Vorrichtung 1.1 bis 1.5 ab. Die Temperatur dieses Kühlmediums wird durch geeignetes Abkühlen, zum Beispiel in einem externen Kühler, bzw. durch einen entsprechenden Volumenstrom entsprechend der Erfordernisse in der Zelle eingestellt.

## Patentansprüche

1. Vorrichtung (1, 1.1 bis 1.5) zur Durchführung einer chemischen Reaktion zur Erzeugung eines Brenngases für eine Brennstoffzelle, umfassend zwei übereinander angeordnete Formteile (2, 3), welche ein Reaktionsströmungsfeld (R) mit einem ober- und unterseitig der Formteile (2, 3) verlaufenden Strömungskanal (4, 4.1 bis 4.3) für einen Brennstoff bilden, wobei der Strömungskanal (4, 4.1 bis 4.3) einen Katalysator zur chemischen Reaktion des Brennstoffs aufweist und die beiden Formteile (2, 3) außenseitig jeweils mit einer Deckplatte (8, 9) versehen sind, **dadurch gekennzeichnet, dass** die Formteile (2, 3) mit Durchbrüchen (6) versehen sind, die den oberseitigen Strömungskanal (4.1 oder 4.3) und den unterseitigen Strömungskanal (4.2 bzw, 4.3) des jeweiligen Formteils (2, 3) miteinander verbinden.

2. Vorrichtung nach Anspruch 1, wobei als chemische Reaktion eine Reformierung oder eine Wasser-Gas-Shift-Reaktion ausführbar ist, der als Brennstoff ein zu reformierender Brennstoff oder ein Synthesegas zuführbar ist.

3. Vorrichtung nach Anspruch 1 oder 2, wobei der Strömungskanal (4, 4.1 bis 4.3) durch Umformen der Formteile (2, 3) ausgebildet ist.

4. Vorrichtung nach einem der vorhergehenden Ansprüche 1 bis 3, wobei die Formteile (2, 3) zueinander korrespondierende Umformungen aufweisen, so dass die Formteile (2, 3) unter Bindung des Strömungskanals (4, 4.1 bis 4.3) aufeinander stapelbar sind.

5. Vorrichtung nach einem der vorhergehenden Ansprüche, wobei oberseitig des einen Formteils (2) eine Zuführung (5) für den Brennstoff und unterseitig des anderen Formteils (3) eine Abführung (7) für den Brennstoff oder umgekehrt vorgesehen sind.

6. Vorrichtung nach einem der vorhergehenden Ansprüche, wobei der Katalysator ein Edelmetall, Kupfer, Zink oder eine Platin-Aluminiumoxid-Verbindung oder eine Platin-Zinn-Verbindung ist.

7. Vorrichtung nach einem der vorhergehenden Ansprüche, wobei der Brennstoff gasförmig oder flüssig ist.

8. Vorrichtung nach einem der vorhergehenden Ansprüche, wobei die Deckplatten (8, 9) außenseitig mit Stützelementen (10) versehen sind, welche die Deckplatten (8, 9) nach außen hin unter Bildung eines Spaltes gegenüber weiteren äußeren Formteilen (12, 13) abstützen.

9. Vorrichtung nach Anspruch 8, wobei zwischen den äußerten Deckplatten (8, 9) und den äußeren Formteilen (12, 13) jeweils eine Zwischenplatte (15) angeordnet ist, die außenseitig mit Stützelementen (14) versehen ist, die das jeweilige äußere Formteile (12, 13) unter Bildung eines Spaltes gegenüber der zugehörige Zwischenplatten (15) abstützt.

10. Vorrichtung nach Anspruch 9, wobei zwischen den äußeren Formteilen (12, 13) und den Zwischenplatten (15) ein Kühlströmungsfeld gebildet ist.

11. Vorrichtung nach einem der vorhergehenden Ansprüche 8 bis 10, wobei die Stützelement (10, 14) durch Umformung gebildet sind.

12. Vorrichtung nach einem der vorhergehenden Ansprüche, wobei die Deckplatten (8, 9) mit Dichtungsnuten (N) versehen sind.

13. Vorrichtung nach einem der vorhergehenden Ansprüche, wobei die Formteile (2, 3, 12, 13) und die Deckplatten (8, 9) aus Metall oder einer Metalllegierung bestehen.

14. Vorrichtung nach einem der vorhergehenden Ansprüche, wobei die Formteile (2, 3) mit einem Katalysatormaterial beschichtet sind oder aus einem katalytisch wirkenden Material gebildet sind.

15. Vorrichtung nach einem der vorhergehenden Ansprüche, wobei die Formteile (2, 3) und die Deckplatten (8; 9) umlaufend dicht miteinander verbunden sind, insbesondere durch Schweißen, Löten und/oder mechanisches Umformen.

16. Vorrichtung nach Anspruch 9, wobei die Formteile (2, 3), Deckplatten (8, 9) und Zwischenplatten (15) sowie äußeren Formteile (12, 13) zu einem Stapel (11) aufeinander stapelbar sind, wobei die inneren Formteile (2, 3) mit den abgedeckten Deckplatten (8, 9) einen inneren Kern bilden, auf den ober- und unterseitig jeweils eine Zwischenplatte (15) und ein weiteres äußeres Formteil (12, 13) aufstapelbar sind.

17. Bipolarplatte (11), auf weiche ober- und/oder unterseitig abwechselnd Membranen und/oder Elektrolyteinheiten aufstapelbar sind, umfassend eine Vorrichtung (1, 1.1 bis 1.5) nach einem der vorhergehenden Ansprüche 1 bis 16, die einen inneren Kern (16) bildet.

18. Verwendung einer Anordnung mehrerer Bipolarplatten (11.1 bis 11.5) nach Anspruch 17, wobei mehrere Vorrichtungen (1.1 bis 1.3) zur Durchführung einer Reformierung und weitere Vorrichtungen (1.4 bis 1.5) zur Durchführung einer Wasser-Gas-Shift-Reaktion ausgebildet sind.

## Claims

1. A device (1, 1.1 to 1.5) for performing a chemical reaction for producing a fuel gas for a fuel cell, comprising two shaped parts (2, 3) which are arranged one above the other and which form a reaction flow field (R) having a flow channel (4, 4.1 to 4.3) for a fuel, said flow channel running on the upper and lower sides of the shaped parts (2, 3), wherein the flow channel (4, 4.1 to 4.3) has a catalyst for the chemical reaction of the fuel, and the two shaped parts (2, 3) are each provided on the outside with a cover plate (8, 9), **characterized in that** the shaped parts (2, 3) are provided with openings (6) which connect the flow channel (4.1 or 4.3) on the upper side and the flow channel (4.2 and/or 4.3) on the lower side of the respective shaped part (2, 3) to each other.

2. The device according to claim 1, wherein as chemical reaction, a reforming or a water-gas-shift reaction can be performed, to which a reforming fuel or a synthesis gas can be fed as fuel.

3. The device according to claim 1 or claim 2, wherein the flow channel (4, 4.1 to 4.3) is formed by shaping the shaped parts (2, 3).

4. The device according to any one of the preceding claims 1 to 3, wherein the shaped parts (2, 3) have shaped forms which correspond to each other so that the shaped parts (2, 3) can be stacked on top of each other, thereby forming the flow channel (4, 4.1 to 4.3).

5. The device according to any one of the preceding claims, wherein on the upper side of the one shaped part (2), a feed line (5) for the fuel is provided, and on the lower side of the other shaped part (3), a discharge line (7) for the fuel is provided, or vice versa.

6. The device according to any one of the preceding claims, wherein the catalyst is a noble metal, copper, zinc or a platinum-aluminum compound or a platinum-tin compound.

7. The device according to any one of the preceding claims, wherein the fuel is gaseous or liquid.

8. The device according to any one of the preceding claims, wherein the cover plates (8, 9) are provided on the outside with support elements (10) which support the cover plates (8, 9) towards the outside, thereby forming a gap with respect to other outer shaped parts (12, 13).

9. The device according to claim 8, wherein between the outer cover plates (8, 9) and the outer shaped parts (12, 13) in each case one intermediate plate (15) is arranged, which is provided on the outside with support elements (14), which support the respective outer shaped part (12, 13), thereby forming a gap with respect to the associated intermediate plates (15).

10. The device according to claim 9, wherein between the outer shaped parts (12, 13) and the intermediate plates (15), a cooling flow field is formed.

11. The device according to any one of the preceding claims 8 to 10, wherein the support elements (10, 14) are formed by shaping.

12. The device according to any one of the preceding claims, wherein the cover plates (8, 9) are provided with sealing grooves (N).

13. The device according to any one of the preceding claims, wherein the shaped parts (2, 3, 12, 13) and the cover plates (8, 9) are made of metal or a metal alloy.

14. The device according to any one of the preceding claims, wherein the shaped parts (2, 3) are coated with a catalyst material or are formed from a catalytically acting material.

15. The device according to any one of the preceding claims, wherein the shaped parts (2, 3) and the cover plates (8, 9) are connected to each other in a circumferentially sealed manner, in particular by welding, soldering and/or mechanical shaping.

16. The device according to claim 9, wherein the shaped parts (2, 3), cover plates (8, 9) and intermediate plates (15) as well as the outer shaped parts (12, 13) can be stacked on top of each other so as to form a stack (11), wherein the inner shaped parts (2, 3) together with the covered cover plates (8, 9) form an inner core, on the upper and lower sides of which in each case an intermediate plate (15) and another outer shaped part (12, 13) can be stacked.

17. A bipolar plate (11), on the upper and/or lower sides of which, membranes and/or electrolyte units can be alternately stacked, comprising a device (1, 1.1 to 1.5) according to any one of the preceding claims 1 to 16, which device forms an inner core (16).

18. Use of an arrangement of a plurality of bipolar plates (11.1 to 11.5) according to claim 17, wherein a plurality of devices (1.1 to 1.3) are formed for performing a reforming, and further devices (1.4 to 1.5) are formed for performing a water-gas-shift reaction.

## Revendications

1. Dispositif (1, 1.1 à 1.5) servant à la réalisation d'une réaction chimique pour la production d'un gaz combustible pour une pile à combustible, comprenant deux pièces de forme (2, 3) disposées l'une sur l'autre, pièces de forme qui constituent un champ d'écoulement de réaction (R) comportant un conduit d'écoulement (4, 4.1 à 4.3) s'étendant au-dessus et au-dessous des pièces de forme (2, 3), ledit conduit d'écoulement étant prévu pour un gaz combustible, où le conduit d'écoulement (4, 4.1 à 4.3) présente un catalyseur pour la réaction chimique du gaz combustible, et les deux pièces de forme (2, 3) sont dotées, extérieurement, à chaque fois d'une plaque de recouvrement (8, 9), **caractérisé en ce que** les pièces de forme (2, 3) sont dotées de passages (6) qui relient, l'un à l'autre, le conduit d'écoulement supérieur (4.1 ou 4.3) et le conduit d'écoulement inférieur (4.2 ou 4.3) de la pièce de forme respective (2, 3).

2. Dispositif selon la revendication 1, où un reformage ou une réaction de conversion du gaz à l'eau peut être réalisé(e) comme réaction chimique, reformage ou réaction auquel ou à laquelle peut être fourni, comme combustible, un combustible à reformer ou un gaz de synthèse.

3. Dispositif selon la revendication 1 ou 2, où le conduit d'écoulement (4, 4.1 à 4.3) est configuré par formage des pièces de forme (2, 3).

4. Dispositif selon l'une quelconque des revendications précédentes 1 à 3, où les pièces de forme (2, 3) présentent des formages qui se correspondent, de sorte que les pièces de forme (2, 3) sont empilables l'une sur l'autre, en formant le conduit d'écoulement (4, 4.1 à 4.3).

5. Dispositif selon l'une quelconque des revendications précédentes, où il est prévu, au-dessus de l'une des pièces de forme (2), une alimentation (5) pour le combustible et, au-dessous de l'autre pièce de forme (3), une évacuation (7) pour le combustible ou bien inversement.

6. Dispositif selon l'une quelconque des revendications précédentes, où le catalyseur est un métal spécial, du cuivre, du zinc ou un composé de platine et d'oxyde d'aluminium ou un composé de platine et d'étain.

7. Dispositif selon l'une quelconque des revendications précédentes, où le combustible est gazeux ou liquide.

8. Dispositif selon l'une quelconque des revendications précédentes, où les plaques de recouvrement (8, 9) sont dotées, extérieurement, d'éléments de support (10) qui supportent les plaques de recouvrement (8, 9) tournées vers l'extérieur, en formant un intervalle par rapport aux autres pièces de forme extérieures (12, 13).

9. Dispositif selon la revendication 8, où une plaque intermédiaire (15) est disposée à chaque fois entre les plaques de recouvrement extérieures (8, 9) et les pièces de forme extérieures (12, 13), plaque intermédiaire qui est dotée, extérieurement, d'éléments de support (14) qui supportent la pièce de forme extérieure respective (12, 13), en formant un intervalle par rapport aux plaques intermédiaires associées (15).

10. Dispositif selon la revendication 9, où un champ d'écoulement de refroidissement est formé entre les pièces de forme extérieures (12, 13) et les plaques intermédiaires (15).

11. Dispositif selon l'une quelconque des revendications précédentes 8 à 10, où les éléments de support (10, 14) sont usinés par formage.

12. Dispositif selon l'une quelconque des revendications précédentes, où les plaques de recouvrement (8, 9) sont dotées de rainures d'étanchéité (N).

13. Dispositif selon l'une quelconque des revendications précédentes, où les pièces de forme (2, 3, 12, 13) et les plaques de recouvrement (8, 9) sont en métal ou se composent d'un alliage de métaux.

14. Dispositif selon l'une quelconque des revendications précédentes, où les pièces de forme (2, 3) sont recouvertes d'une matière de catalyseur ou bien sont formées par une matière agissant catalytiquement.

15. Dispositif selon l'une quelconque des revendications précédentes, où les pièces de forme (2, 3) et les plaques de recouvrement (8, 9) sont assemblées les unes aux autres en étant étanches sur leur périphérie, l'assemblage étant réalisé en particulier par soudage, par brasage et/ou par formage mécanique.

16. Dispositif selon la revendication 9, où les pièces de forme (2, 3), les plaques de recouvrement (8, 9) et les plaques intermédiaires (15), ainsi que les pièces de forme extérieures (12, 13), sont empilables les unes sur les autres pour former une pile (11), où les pièces de forme intérieures (2, 3) forment avec les plaques de recouvrement recouvertes (8, 9) un noyau intérieur sur lequel sont empilables, sur le dessus et sur le dessous, à chaque fois une plaque intermédiaire (15) et une autre pièce de forme extérieure (12, 13).

17. Plaque bipolaire (11) sur laquelle sont empilables sur le dessus et/ou sur le dessous, de façon alternée, des membranes et/ou des ensembles électrolytiques, ladite plaque bipolaire comprenant un dispositif (1, 1.1 à 1.5) selon l'une quelconque des revendications précédentes 1 à 16, dispositif qui forme un noyau intérieur (16).

18. Utilisation d'un agencement de plusieurs plaques bipolaires (11.1 à 11.5) selon la revendication 17, où plusieurs dispositifs (1.1 à 1.3) sont configurés pour servir à la réalisation d'un reformage, d'autres dispositifs (1.4 à 1.5) étant configurés pour servir à la réalisation d'une réaction de conversion du gaz à l'eau.
